# EUROPÄISCHE PATENTSCHRIFT

(11) **EP 4 030 204 B1**
(45) Veröffentlichungstag und Bekanntmachung des Hinweises auf die Patenterteilung: **20.09.2023**
(21) Anmeldenummer: 21152296.6
(22) Anmeldetag: 19.01.2021
(51) Int. Cl.: G02B 6/02, C03B 37/014, C03B 37/012

(54) **MIKROSTRUKTURIERTE OPTISCHE FASER UND VORFORM DAFÜR**
MICROSTRUCTURED OPTICAL FIBRE AND PREFORM FOR SAME
FIBRE OPTIQUE MICROSTRUCTURÉE ET PRÉFORME ASSOCIÉE

(43) Veröffentlichungstag der Anmeldung: 20.07.2022
(73) Patentinhaber: Heraeus Quarzglas GmbH & Co. KG, 63450 Hanau (DE)
(72) Erfinder: NEUMANN, CHRISTIAN, 63450 Hanau (DE); ROSENBERGER, Manuel, 63450 Hanau (DE); SCHUSTER, KAY, 06803 Bitterfeld (DE); PLASS, Jaqueline, 63450 Hanau (DE)
(74) Vertreter: Staudt, Armin Walter

(56) Entgegenhaltungen:
- EP-A1- 1 580 170
- DE-B3-102011 121 153
- US-A1- 2010 266 251

## Beschreibung

### Technischer Hintergrund

Die Erfindung liegt auf dem Gebiet der mikrostrukturierten optischen Fasern, insbesondere auf dem von Hohlkernfasern.

Außerdem geht es bei der Erfindung um eine Vorform zur Herstellung einer mikrostrukturierten optischen Faser.

Mikrostrukturierte optische Fasern weisen einen sich entlang einer Faser-Längsachse erstreckenden massiven oder hohlen Kernbereich und einen den Kernbereich umgebenden und von Hohlkanälen durchzogenen inneren Mantelbereich auf. Diese Fasern werden auch als photonische Kristallfasern (Photonic Crystal Fiber; PCF) bezeichnet. Dazu zählen beispielsweise "photonische Bandlückenfasern" und "Antiresonanz-Reflexionsfasern".

Bei "photonischen Bandlückenfasern" ist der Kern von einem Mantel umgeben, in dem kleine Hohlkanäle periodisch angeordnet sind. Die periodische Struktur der Hohlkanäle im Mantel bewirkt aufgrund von Braggreflexion an den Glas/Luft-Grenzflächen eine konstruktive Interferenz der reflektierten Strahlungsanteile und eine destruktive Interferenz der transmittierten (transversalen) Anteile. Die dadurch erzeugte stehende Welle im Kern vermindert den Energietransport in transversaler Richtung, so dass die Wellenleitung in Richtung der Faserlängsachse stattfindet. Diese Interferenzeffekte führen jedoch nur in einem begrenzten Wellenlängenbereich zu guten Leitungseigenschaften, der in Anlehnung an die Halbleitertechnologie als "photonische Bandlücke" bezeichnet wird.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den hohlen Faserkern leiten.

Potentielle Anwendungen der mikrostrukturierten optischen Faser liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Hohlkernfasern ermöglichen außerdem präzisionsspektroskopische Untersuchungen an im Hohlkern befindlichen Medien (Gase oder Flüssigkeiten). Da das im Kern geführte Licht zu einem großen Teil mit dem zu untersuchenden Medium überlappt, können auch Konzentrationen im ppm-Bereich detektiert werden. Daneben kommt auch der Einsatz in optischen Atomuhren, Quantencomputern und der Fluoreszenzmikroskopie in Betracht.

### Stand der Technik

Die mikrostrukturierten optischen Fasern bestehen häufig mindestens zum Teil aus synthetischem Quarzglas. Dieses kann herstellungsbedingt Hydroxylgruppen (kurz: OH-Gruppen) enthalten, die sich insbesondere im Wellenlängenbereich von etwa 800 nm bis 3000 nm auf die optische Dämpfung auswirken.

Zur Herstellung von verlustarmem Quarzglas, das möglichst wenig Hydroxylgruppen enthält (1 Gew.-ppm oder weniger), umfasst der Herstellungsprozess häufig eine Dehydratationsbehandlung unter Einsatz von Halogenen, insbesondere von Chlor. Darüber hinaus sind Fluor und Chlor gängige Dotierstoffe zur Beeinflussung der Brechzahl und der Viskosität von Quarzglas. Typischerweise hat daher synthetisch erzeugtes Quarzglas mit einem niedrigen OH-Gehalt einen relativ hohen Halogengehalt.

In Abhängigkeit vom Herstellungsweg können die Halogene in der Netzwerkstruktur des Quarzglases chemisch gebunden oder darin physikalisch gelöst sein. Die Art der Einbindung hat Einfluss auf sogenannte Ausgasungsprozesse. Halogenbeladung und -ausgasung können zu Problemen beim Fasereinsatz führen. Beispielsweise zur Ausbildung störender Absorptionsbanden, Blasenbildung im Glas bei Heißprozessierung, Ablagerungen oder Veränderung des pH-Wertes von zu untersuchenden Medien, die im Kontakt mit der Faser sind.

Beispielsweise wird in der US 2010/266251 A1 beschrieben, dass bei einer mikrostrukturierten optischen Faser, die aus einer Vorform aus chlorhaltigem Quarzglas gezogen worden ist, eine Degradation der Faser-Endfläche auftreten kann. Die Degradation wird darauf zurückgeführt, dass aus dem Quarzglas ausdiffundierendes Chlor durch einen Hohlkanal zur Faser-Endfläche gelangt und dort durch Reaktion mit Wasser oder Ammoniak aus der Umgebung Ablagerungen oder korrosive Substanzen bildet. Es wird empfohlen, die Ausdiffusion von Chlor zu reduzieren, indem zumindest Teile der Vorform aus Quarzglas mit einer Chlorkonzentration von weniger als 300 ppm gebildet werden. Der Chlorgehalt kann beispielsweise durch Ausheizen der Vorform reduziert werden. Alternativ ist eine Diffusionsbarriere aus Quarzglas vorgesehen, die an den Hohlkanal angrenzt und die Eindiffusion von Chlor in den Hohlkanal reduziert.

Außerdem können bei der Herstellung und beim Einsatz der Fasern Verunreinigungen (Gase, Feuchtigkeit usw.) durch Ausgasung aber auch durch Eintritt über offene Faserenden in die Hohlkanäle gelangen, die sich auf die Fasereigenschaften ungünstig auswirken. Jede Spur von Feuchtigkeit bewirkt nicht nur eine Erhöhung der Dämpfung im Wellenlängenbereich um 1380 nm, sondern sie kann auch zu einer Oberflächenkorrosion an den inneren und äußeren Faseroberflächen führen. So kann beispielsweise Wasser Si-O-Si- oder Si-Cl-Bindungen der Netzwerkstruktur aufbrechen, und es können oberflächengebundene Si-OH-Spezies sowie HCl entstehen.

Zum Schutz vor Korrosion ist der Faser-Außenmantel daher in der Regel mit einem Polymer-Coating versehen. Die WO 2020/070488 A1 beschreibt eine mikrostrukturierte optische Faser für Diagnosezwecke, bei der zusätzlich zum Schutz gegen Wassereintritt in das Coating die Faser in einem Rohr angeordnet ist, das mit einem wasserblockierenden Füllmaterial gefüllt ist.

Aus der WO 2018/237048 A1 ist ein Hochleistungskabel mit einer Antiresonanten Hohlkernfaser bekannt, bei der die offenen Faserenden zur Vermeidung von Wassereinritt mit Schutzkappen bedeckt sind, die ein Fenster mit einer nanotexturierten Oberfläche haben, um Reflexionsverluste zu reduzieren.

### Technische Aufgabenstellung

Bei der aus der US 2010/266251 A1 bekannten, gattungsgemäßen mikrostrukturierten optischen Faser werden als Werkstoff für die Diffusionsbarriere handelsübliche Quarzglas-Qualitäten angegeben (Handelbezeichnung F100 beziehungsweise F110 der Heraeus Quarzglas GmbH & Co. KG), die einen moderaten Chlorgehalt von weniger als 300 Gew.-ppm aufweisen. Der Hydroxylgruppengehalt dieser Quarzglas-Qualitäten liegt jedoch bei mindestens 400 Gew.-ppm. Insoweit werden hier zu Gunsten eines halogenarmen Quarzglases ein höherer Hydroxylgruppengehalt und die damit einhergehenden Dämpfungsverluste in Kauf genommen.

Die zum Schutz vor Korrosion am Faser-Außenmantel applizierbaren Mittel sind an den Innenoberflächen der Faser-Hohlkanäle nicht anwendbar. In Hohlkernfasern kommt es durch Korrosion zu einem allmählichen Dämpfungsanstieg. Endkappen zum Schutz von Wassereintritt führen zu Übertragungsverlusten.

Ziel der Erfindung ist es daher, bei einer mikrostrukturierten optischen Faser, insbesondere einer Hohlkernfaser, den korrosionsbedingten Dämpfungsanstieg und die Ausgasungen von Chlor zu verringern.

Außerdem liegt der Erfindung die Aufgabe zugrunde, eine zur Herstellung einer derartigen mikrostrukturierten optischen Faser geeignete Vorform bereitzustellen.

### Zusammenfassung der Erfindung

Hinsichtlich der mikrostrukturierten optischen Faser wird diese Aufgabe ausgehend von einer Faser mit den eingangs genannten Merkmalen erfindungsgemäß dadurch gelöst, dass mindestens ein Teil der Hohlkanäle von einem Wandungsmaterial aus synthetischem Quarzglas begrenzt ist, das eine Chlorkonzentration von weniger als 300 Gew.-ppm und Sauerstoffmangelzentren in einer Konzentration von mindestens 2 × 10¹⁵ cm⁻³ aufweist.

Das Wandungsmaterial, das mindestens ein Teil der Hohlkanäle der mikrostrukturierten optischen Faser begrenzt, bevorzugt begrenzt es alle Hohlkanäle der Faser, besteht aus synthetischem Quarzglas. Dieses ist zum einen chlorfrei oder es weist eine niedrige Chlor-Konzentration von weniger als 300 Gew.-ppm, bevorzugt weniger al 30 Gew.-ppm, besonders bevorzugt weniger als 3 Gew.-ppm, auf. Die eingangs beschriebenen technischen Probleme, die mit der Ausgasung und der chemischen Reaktion von Chlor einhergehen können, werden so möglichst unterbunden oder gering gehalten.

Außerdem hat das synthetische Quarzglas einen unterstöchiometrischen Sauerstoffgehalt. Dieser zeigt sich darin, dass die Netzwerkstruktur Sauerstoffmangelzentren aufweist, bei denen Sauerstoffstellen des Netzwerks unbesetzt oder von anderen Atomen besetzt sind. Bekannte Typen für Sauerstoffmangelzentren sind:
(1) ein dreifach koordiniertes Siliciumatom mit einem paramagnetischem Elektron (E`-Zentrum) mit einem Absorptionsmaximum bei einer Wellenlänge von 210 nm, wobei an sich den nicht abgesättigten Bindungen der Netzwerkstruktur ein oder zwei Elektronen angebunden haben können,
(2) Sauerstoffdefizit-Zentren (ODC; Oxygen Deficiency Center), von denen man zwei im Gleichgewicht zueinander stehende Typen unterscheidet, die in der Literatur als ODC I und ODC II bezeichnet werden.
   ODC I: direkte -Si-Si- Bindung mit einem Absorptionsmaximum bei einer Wellenlänge von 163 nm (7,6 eV) und
   ODC II: zweifach koordiniertes Siliciumatom mit einem Absorptionsmaximum bei einer Wellenlänge von 247 nm (5.0 eV).

Die Konzentration dieser Sauerstoffmangelzentren in Quarzglas kann spektroskopisch anhand der Absorption des E'-Zentrums bei 210 nm beziehungsweise des ODC-Zentrums bei 247 nm ermittelt werden. Als Maß für einen hinreichenden Grad der Unterstöchiometrie des Quarzglases insgesamt dient hier die spektroskopisch anhand der Absorption bei einer Wellenlänge von 247 nm ermittelt Konzentration der ODC-Sauerstoffmangelzentren, wenn diese 2 × 10¹⁵ cm⁻³ oder mehr beträgt..

Es ist davon auszugehen, dass das weitab seiner stöchiometrischen Zusammensetzung vorliegende Quarzglas außer den beiden Spezifizierten weitere Sauerstoffmangelzentren aufweist, die anhand ihrer spezifischen Photolumineszenz feststellbar sind, ohne dass sie im Einzelnen einer bestimmten Defektart zuzuordnen sind.

Sauerstoffmangelzentren in synthetischem Quarzglas werden üblicherweise als nachteilige und möglichst zu vermeidende strukturelle Fehlstellen angesehen, die die optischen Eigenschaften beeinträchtigen können. Bei der vorliegenden Erfindung werden derartige Sauerstoffmangelzentren jedoch gezielt in großer Menge im Wandungsmaterial erzeugt, damit dieses aktiv mit Feuchtigkeit reagieren und diese dadurch eliminieren kann. Die Feuchtigkeit bei der Faserherstellung oder beim Einsatz der Faser verbleibende oder entstehende Feuchtigkeit befindet sich beispielsweise in den Hohlkanälen oder einem etwaigen Hohlkern, und ist beispielsweise adsorbiert auf Oberflächen der Vorform oder der Faser. Sie umfasst sowohl im Umgebungsgas gelöste Wassermoleküle als auch physikalisch adsorbierte Wassermoleküle. Beides kann während bei erhöhten Temperaturen mit den Sauerstoffmangelzentren der Quarzglas-Wandung beispielsweise nach folgender Reaktionsgleichung reagieren

Si-Si + H₂O --> Si-H + Si-OH.

Vorhandene Feuchtigkeit wird dadurch in der Netzwerkstruktur des Quarzglases chemisch gebunden und immobilisiert. Infolge dieser "Trocknungswirkung" der Sauerstoffmangelzentren wird der Einfluss von Feuchtigkeit auf das Transmissionsverhalten der Faser möglichst gering gehalten. Dies wirkt sich insbesondere positiv auf den sogenannten "Hochfeldbereich" aus, der den Bereich der Lichtleitung bezeichnet, der im Hohlkern stattfindet. Dort ist weniger Feuchtigkeit vorhanden, weil diese durch Reaktion mit den wasserabsorbierenden Sauerstoffmangeldefekten gebunden wird. Darüber hinaus wird auch die Eindiffusion von Feuchtigkeit über offene Faserenden kinetisch gehemmt.

Im Hinblick auf diese Wirkungen ist die Konzentration der Sauerstoffmangelzentren im Quarzglas grundsätzlich so hoch wie möglich und beträgt insbesondere mindestens 5×10¹⁵ cm⁻³, besser 1×10¹⁶ cm⁻³ und vorzugsweise mindestens 5×10¹⁶ cm⁻³.

Andererseits absorbieren Sauerstoffmangelzentren Licht, insbesondere Licht im UV-Wellenlängenbereich; sie erhöhen die Viskosität des Glases und sie erschweren seine Verarbeitung; insbesondere die Homogenisierung. Die spezifische Anwendung des Lichtwellenleiters bestimmt daher die akzeptable Maximal-Konzentration. Diese hängt beispielsweise von der Arbeitswellenlänge, der Länge der Übertragungsstrecke (Faserlänge; Stablänge), dem im Lichtwellenleiter geführten Lichtmodenprofil, dem Profil des Lichtwellenleiters und den Anforderungen an die Mindestleistung am Lichtwellenleiterende oder an die Homogenität des Glases ab, auch im Hinblick auf sein Schmelz- und Ziehverhalten. Bei langwelliger Arbeitswellenlänge, kurzer Übertragungsstrecke, beispielsweise im Meter- oder Zentimeterbereich und geringen Anforderungen an die Mindest-Lichtleistung am Lichtwellenleiterende und an die Homogenität des Glases sind hohe Konzentrationen an Sauerstoffmangelzentren oberhalb von 2×10²⁰ cm⁻³ technisch möglich. Höhere Anforderung der oben genannten Arten können die Konzentrations-Obergrenze aber auf maximal 2×10²⁰ cm⁻³, vorzugsweise maximal 5×10¹⁹ cm⁻³, maximal 1×10¹⁹ cm⁻³, maximal 5×10¹⁸ cm⁻³, maximal 2×10¹⁸ cm⁻³, maximal 1×10¹⁸ cm⁻³, maximal 5×10¹⁷ cm⁻³, maximal 2×10¹⁷ cm⁻³ und bei besonders hohen Anforderungen bevorzugt auf maximal 1×10¹⁷ cm⁻³ limitieren.

Die Sauerstoffmangelzentren können in das synthetische Quarzglas durch eine nachträgliche Temperaturbehandlung in reduzierend wirkender Atmosphäre eingebracht werden. Dabei kommt es zu einem Gradienten der Defektzentren-Verteilung über das Volumen der Begrenzungswandung mit einem Maximum im Bereich der Wandungsoberflächen, also dem Ort, an dem die Reaktion mit Feuchtigkeit in erster Linie ablaufen soll. Alternativ dazu gelingt auch eine Defektzentren-Erzeugung in hoher Konzentration und gleichzeitig homogener Verteilung unmittelbar bei der Herstellung des synthetischen Quarzglases.

Zur Herstellung von synthetischem Quarzglas wird ein siliciumhaltiges Einsatzmaterial durch Hydrolyse oder Oxidation in einer Reaktionszone zu SiO₂-Partikeln umgesetzt und diese auf einem Träger abgeschieden. Als Beispiele seien das so genannte OVD-Verfahren (outside vapour phase deposition), das VAD-Verfahren (vapour phase axial deposition) oder das POD-Verfahren (plasma outside deposition) genannt. Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim so genannten "Sootverfahren" die Temperatur beim Abscheiden der SiO₂-Partikel so niedrig, dass eine poröse SiO₂-Sootschicht erhalten wird, die in einem separaten Verfahrensschritt zu transparentem Quarzglas gesintert wird. Sowohl das Direktverglasen als auch das Sootverfahren führen letztlich zu einem dichten, transparenten, hochreinen, synthetischen Quarzglas.

Beide Methoden sind für die Erzeugung von Sauerstoffmangelzentren geeignet, indem während des Abscheideprozesses reduzierend wirkende Bedingungen eingestellt werden. Eine Bedingung "wirkt reduzierend" in diesem Sinne, wenn bei der Bildung der SiO₂-Partikel in der Reaktionszone und ihrer Abscheidung,
(1) entweder ein unterstöchiometrischer Sauerstoff-Anteil bereitgestellt wird, so dass das vollständige Verbrennen der Siliciumverbindung in der Reaktionszone bereits aus stöchiometrischen Gründen ausgeschlossen ist,
(2) oder die Verweildauer der Siliciumverbindung in der Reaktionszone kürzer eingestellt wird als zum vollständigen Umsetzen des Einsatzmaterials erforderlich.

Ersteres geschieht durch Führung des Abscheideprozesses mit so geringer Sauerstoffzufuhr, dass bei den gegebenen Reaktionsbedingungen bereits aus stöchiometrischen Gründen das vollständige Verbrennen der Siliciumverbindung in der Reaktionszone ausgeschlossen ist.

Letzteres geschieht beispielsweise dadurch, dass das Einsatzmaterial in der Reaktionszone vor dem Sauerstoff abgeschirmt wird, wie etwa durch Vorsehen eines Trenngasstroms aus Inertgas zwischen dem Strom aus Einsatzmaterial und einem Sauerstoffstrom oder durch Einstellen einer zu kurzen Reaktionszone und/oder durch Erzeugen einer zu hohen Strömungsgeschwindigkeit des Einsatzmaterials in der Reaktionszone.

In jedem Fall wird ein in Bezug auf den Sauerstoffgehalt unterstöchiometrisches, synthetisches Quarzglas erhalten. Maßnahmen zur Einstellung der gewünschten Sauerstoffmangelzentren infolge reduzierender Bedingungen beim Abscheideprozess sind anhand weniger Versuche auf ihre Eignung hin überprüfbar.

Das Sootverfahren bietet zur Erzeugung homogen verteilter Sauerstoffmangelzentren außerdem die Möglichkeit einer Nachbehandlung des Sootkörpers in reduzierend wirkender Atmosphäre. Eine Atmosphäre "wirkt reduzierend" in diesem Sinne, wenn eine Substanz vorhanden ist, die gegenüber Silicium oder SiO₂ als Elektronendonator wirkt, wie beispielsweise Wasserstoff oder Kohlenwasserstoffe.

Außer einem hohen Anteil an Sauerstoffmangelzentrenn zeichnet sich das synthetische Quarzglas durch einen geringen Hydroxylgruppengehalt von weniger als 10 Gew.-ppm, vorzugsweise weniger als 1 Gew.-ppm, aus.

Hydroxylgruppen sind geeignet, die vorhandenen Sauerstoffmangeldefekte abzusättigen und vermindern dadurch deren Trocknungswirkung.

Dies gilt gleichermaßen für Halogene. Daher weist das synthetische Quarzglas vorteilhafterweise einen möglichst geringen Halogengehalt von weniger als 20 Gew.-ppm, vorzugsweise weniger als 10 Gew.-ppm auf.

Im Idealfall besteht das synthetische Quarzglas ausschließlich aus Silicium und aus Sauerstoff und enthält keinerlei Fremdsubstanzen. In der Praxis sind Fremdsubstanzen jedoch unvermeidlich. Fremdsubstanzen im synthetischen Quarzglas können die trocknende Wirkung der Sauerstoffmangelzentren beeinflussen. Kohlenstoff, der sich beispielsweise durch Einsatz von organischem siliciumhaltigen Einsatzmaterial infolge reduzierender Bedingungen beim Abscheideprozess oder bei einer reduzierenden Nachbehandlung eines SiO₂-Sootkörpers bilden kann, hat diese schädliche Wirkung nicht - ebenso wenig wie Stickstoff, so dass diese Substanzen nicht unter "Fremdsubstanz" im obigen Sinne subsumiert werden.

Metallische Fremdsubstanzen sind insbesondere Alkali- und Erdalkalimetalle, sowie die inneren Übergangsmetalle des Periodensystems und die Lanthanoiden. In Quarzglas liegen diese Substanzen typischerweise in ionischer Form vor. Insbesondere bei unterstöchiometrischem Sauerstoffgehalt kann es aber auch zu reduzierten, metallischen Verunreinigungen kommen. Metallische Fremdsubstanzen können ausgeprägte Absorptionen erzeugen, welche die Transmission beeinträchtigen.

Im Hinblick hierauf hat es sich bewährt, wenn das Quarzglas des Wandungsmaterials Fremdsubstanzen - mit Ausnahme von Kohlenstoff und Stickstoff - in einer Konzentration von insgesamt weniger als 30 Gew.-ppm, vorzugsweise weniger als 3 Gew.-ppm enthält, und die Konzentration metallischer Fremdsubstanzen im Quarzglas bei insgesamt weniger als 1 Gew.-ppm, besonders bevorzugt bei weniger als 100 Gew.-ppb liegt.

Es hat sich außerdem als vorteilhaft erwiesen, wenn das synthetische Quarzglas eine Viskosität bei einer Temperatur von 1.200°C von mindestens 10¹³ dPas aufweist.

Die im Vergleich zu defektärmerem synthetischem Quarzglas höhere Viskosität des Wandungsmaterials mit Sauerstoffmangelzentren wirkt sich auf den Erhalt von Strukturen innerhalb des mikrostrukturierten inneren Mantelbereichs beim Faserziehprozess und damit auf die Dämpfungseigenschaften der Faser vorteilhaft aus. Dies gilt insbesondere für filigrane Strukturen, wie sie im inneren Mantelbereich mikrostrukturierter Antiresonanz-Fasern vorkommen.

Bei einer besonders bevorzugten Ausführungsform der mikrostrukturierten optischen Faser ("Bandlückenfaser") weist der Kernbereich mindestens einen Hohlkern auf, wobei der innere Mantelbereich eine mikrostrukturierte regelmäßige Anordnung von sich in Längsrichtung erstreckenden Hohlkanälen umfasst, und wobei der innere Mantelbereich aus dem Wandungsmaterial gefertigt ist.

Bei einer anderen bevorzugten Ausführungsform der mikrostrukturierten optischen Faser ("Antiresonante Hohlkernfaser") weist der Kernbereich mindestens einen Hohlkern auf, wobei der innere Mantelbereich sich in Richtung der Faser-Längsachse erstreckende hohle Strukturelementen umfasst, die ringförmig an der Innenmantelfläche eines Innenmantels angeordnet sind, und die Licht durch einen Antiresonanz-Effekt entlang des Hohlkerns leiten.

Die hohlen Strukturelemente umfassen dabei beispielsweise jeweils eine ARE-Au-ßenkapillare und mindestens eine mit einer Innenmantelfläche der ARE-Außenkapillare verbundene, verschachtelte NE-Innenkapillare (NE, Nested Element), wobei es sich bewährt hat, wenn der Innenmantel, die ARE-Außenkapillare und/oder die NE-Innenkapillare aus dem Wandungsmaterial gefertigt sind. Vorzugsweise sind der Innenmantel und die ARE-Außenkapillare, oder der Innenmantel und die NE-Innenkapillare, oder die ARE-Außenkapillare und die NE-Innenkapillare, und besonders bevorzugt sowohl der Innenmantel als auch die ARE-Außenkapillare und die NE-Innenkapillare aus dem Sauerstoffmangelzentren enthaltenden Wandungsmaterial gefertigt. Bei der Herstellung einer Antiresonanz-Hohlkernfaser sind die genannten Bauteile (neben möglichen weiteren) häufig in einem Bauteil-Ensemble zusammengefasst, wobei sie in einem Kollabier- und/oder Elongierprozess mit einem Außenmantel (oder "Überfangrohr") überfangen werden.

Gegebenenfalls enthält die optische Faser in Form der Antiresonanten Hohlkernfaser auch einen den inneren Mantelbereich umgebenden äußeren Mantelbereich, der von dem Überfangrohr stammt. Das Überfangrohr ist bei einer vorteilhaften Ausführungsform ebenfalls aus dem Sauerstoffmangelzentren enthaltenden Wandungsmaterial gefertigt, also aus synthetischem Quarzglas mit einer Chlorkonzentration von weniger als 300 Gew.-ppm und mit Sauerstoffmangelzentren in einer Konzentration von mindestens 2 × 10¹⁵ cm⁻³.

Der äußere Mantelbereich ist von den Hohlkanälen der Faser in der Regel weiter entfernt als der innere Mantelbereich. Insbesondere infolge seiner vergleichsweise großen Mantelglasmasse kann er aber dennoch zu einer Trocknung auch im Bereich der Hohlkanäle beitragen.

Das Wandungsmaterial aus synthetischem Quarzglas mit einer Chlorkonzentration von weniger als 300 Gew.-ppm und mit Sauerstoffmangelzentren in einer Konzentration von mindestens 2 × 10¹⁵ cm⁻³ ist vergleichsweise teuer. Bei einer anderen Ausführungsform wird ein Überfangrohr eingesetzt, das nicht aus diesem Wandungsmaterial besteht, sondern aus einem Quarzglas mit einer Chlorkonzentration von mehr als 300 Gew.-ppm und mit Sauerstoffmangelzentren in einer Konzentration von weniger als 2 × 10¹⁵ cm⁻³.

Hinsichtlich der Vorform wird die weiter oben angegeben technische Aufgabe erfindungsgemäß dadurch gelöst, dass diese einen sich entlang einer Vorform-Längsachse erstreckenden Kernbereich und einen den Kernbereich umgebenden inneren Mantelbereich aufweist und von Hohlkanälen durchzogen ist, von denen mindestens ein Teil von einem Wandungsmaterial aus synthetisch erzeugtem Quarzglas begrenzt ist, das eine Chlorkonzentration von weniger als 300 Gew.-ppm und Sauerstoffmangelzentren in einer Konzentration von mindestens 2 × 10¹⁵ cm⁻³ aufweist.

Das Wandungsmaterial, das mindestens ein Teil der Hohlkanäle der Vorform begrenzt, bevorzugt begrenzt es alle Hohlkanäle der Vorform, besteht aus synthetischem Quarzglas. Dieses ist zum einen chlorfrei oder es weist eine niedrige Chlor-Konzentration von weniger als 300 Gew.-ppm, bevorzugt weniger al 30 Gew.-ppm, besonders bevorzugt weniger als 3 Gew.-ppm, auf. Die mit der Ausgasung und der chemischen Reaktion von Chlor einhergehenden Probleme können so möglichst unterbunden oder gering gehalten.

Außerdem hat das synthetische Quarzglas einen unterstöchiometrischen Sauerstoffgehalt. Dieser zeigt sich darin, dass die Netzwerkstruktur Sauerstoffmangelzentren aufweist, bei denen Sauerstoffstellen des Netzwerks unbesetzt oder von anderen Atomen besetzt sind. Bekannte Typen für Sauerstoffmangelzentren sind sogenannte E'-Zentren und ODC-Zentren (ODC I ; ODCII), wie oben anhand der mikrostrukturierten optischen Faser näher erläutert.

Die Konzentration dieser Sauerstoffmangelzentren in Quarzglas kann spektroskopisch anhand der Absorption des E'-Zentrums bei 210 nm beziehungsweise des ODC-Zentrums bei 247 nm ermittelt werden. Als Maß für einen hinreichenden Grad der Unterstöchiometrie des Quarzglases insgesamt dient hier die spektroskopisch anhand der Absorption bei einer Wellenlänge von 247 nm ermittelte Konzentration der ODC-Sauerstoffmangelzentren, wenn diese 2 × 10¹⁵ cm⁻³ oder mehr beträgt.

Bei der Erfindung werden die Sauerstoffmangelzentren gezielt in großer Menge im Wandungsmaterial erzeugt, damit dieses aktiv mit Feuchtigkeit reagieren und die Feuchtigkeit dadurch eliminieren können. Die Feuchtigkeit bei Herstellung der Vorform oder der Faser befindet sich beispielsweise in den Hohlkanälen oder einem etwaigen Hohlkern, und ist beispielsweise adsorbiert auf Oberflächen der Vorform oder der Faser. Sie kann mit den Sauerstoffmangelzentren der Quarzglas-Wandung beispielsweise nach folgender Reaktionsgleichung reagieren

Si-Si + H₂O --> Si-H + Si-OH

und wird dadurch in der Netzwerkstruktur des Quarzglases chemisch gebunden und immobilisiert. Infolge dieser "Trocknungswirkung" der Sauerstoffmangelzentren wird der Einfluss von Feuchtigkeit auf das Transmissionsverhalten der Faser möglichst gering gehalten. Darüber hinaus wird auch die Eindiffusion von Feuchtigkeit über offene Vorformenden kinetisch gehemmt.

Die obigen Erläuterungen im Zusammenhang mit der mikrostrukturierten optischen Faser treffen auch für die Vorform zu und werden hiermit einbezogen.

### Messmethoden und Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Messung der Sauerstoffmangelzentren

Die Sauerstoffmangelzentren in SiO₂ werden durch Absorptionsmessungen spektroskopisch erfasst und daraus die Konzentration der Sauerstoffmangelzentren anhand einer vereinfachten Smakula-Gleichung berechnet:
Die Berechnungsmethode ist beschrieben in: Pacchioni, G.; Skuja, L.; Griscom, D. L. (2000). Defects in SiO2 and Related Dielectrics: Science and Technology || OPTICAL PROPERTIES OF DEFECTS IN SILICA. , 10.1007/978-94-010-0944-7(Chapter 3), 73-116. doi:10.1007/978-94-010-0944-7_3

### Antiresonanzelemente

Antiresonanzelemente können einfache oder verschachtelte Strukturelemente der Hohlkernfaser sein. Sie haben mindestens eine Wandung, die aus Richtung des Hohlkerns gesehen eine negative Krümmung (konvex) oder keine Krümmung hat (plan, gerade). Sie bestehen in der Regel aus einem Material, das für das Arbeitslicht transparent ist, beispielsweise aus Glas, insbesondere aus dotiertem oder nicht dotiertem SiO₂.

### Antiresonanzelement-Vorformling

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Verschachtelte Antiresonanzelement-Vorformlinge bilden in der Hohlkernfaser verschachtelte Antiresonanzelemente. Sie setzen sich zusammen aus einem ARE-Außenrohr und mindestens einem weiteren Strukturelement, das in der Innenbohrung des ARE-Außenrohres angeordnet ist. Bei dem weiteren Strukturelement kann es sich um ein weiteres Rohr handeln, das an der Innenmantelfläche des Außenrohres anliegt. Das weitere Rohr wird als "Nested Element" oder kurz als "NE- Innenrohr" oder auch als "verschachteltes NE-Innenrohr" bezeichnet.

In der Innenbohrung des NE-Innenrohres kann bei mehrfach verschachtelten Antiresonanzelement-Vorformlingen mindestens ein weiteres Strukturelement angeordnet sein, beispielsweise ein an der Innenmantelfläche des verschachtelten NE-Innenrohres anliegendes, drittes Rohr. Um bei mehrfach verschachtelten Antiresonanzelement-Vorformlingen zwischen den mehreren Rohren zu unterscheiden, die innerhalb des ARE-Außenrohres angeordnet sind, wird gegebenenfalls zwischen "äußerem NE-Innenrohr" und "innerem NE-Innenrohr" unterschieden.

Der Begriff "Querschnitt" in Verbindung mit zylinderförmigen Antiresonanzelement-Vorformlingen, deren zylinderförmigen Strukturelementen und dem Kapillarhalbzeug bezeichnet stets den Querschnitt senkrecht zur jeweiligen Zylinderlängsachse, und zwar - sofern nichts anderes angegeben - bei rohrförmigen Bauteilen den Querschnitt der Außenkontur (nicht: den Querschnitt der Innenkontur).

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling bezeichnet.

### Vorform / primäre Vorform / sekundäre Vorform / Kernvorform (Cane)

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die primäre Vorform kann als Ensemble aus mindestens einem Hüllrohr und darin lose aufgenommenen oder fest fixierten Vorformlingen oder Vorstufen für Antiresonanzelemente vorliegen. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

Als Kernvorform (engl. Cane) wird in der Literatur eine Vorform bezeichnet, die durch Kollabieren und/oder Elongieren einer primären Vorform erhalten wird und die damit unter die Definition der sekundären Vorform fällt. Typischerweise wird sie vor oder beim Ziehen der Hohlkernfaser mit zusätzlichem Mantelmaterial überfangen.

### Elongieren / Kollabieren

Beim Elongieren wird die primäre Vorform erweicht und dabei gestreckt. Die Streckung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im gestreckten, elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren kann mit einem Elongieren einhergehen.

### Hohlkern / Innerer Mantelbereich / Äußerer Mantelbereich

Das Ensemble aus mindestens einem Hüllrohr und darin lose aufgenommenen oder fest fixierten ARE-Vorformlingen wird hier auch als "primäre Vorform" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf das Ensemble erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Ausführungsbeispiel

Nachfolgend wird die Erfindung anhand eines Ausführungsbeispiels und einer Zeichnung näher erläutert. Im Einzelnen zeigt
- **Figur 1**: ein Diagramm mit Transmissionsspektren verschiedener Quarzglas-Qualitäten,
- **Figur 2**: eine primäre Vorform mit einem Hüllrohr und darin positionierten und fixierten Antiresonanzelement-Vorformlingen zur Herstellung einer Vorform für eine Hohlkernfaser anhand einer Ansicht auf den radialen Querschnitt, und
- **Figur 3**: eine Vorrichtung zum Einsatz bei der werkzeugfeien Fertigung von ARE-Außenrohren und ARE-Innenrohren anhand eines Vertikalziehverfahrens.

### Herstellung von synthetischem Quarzglas mit Sauerstoffmangelzentren

Die Herstellung des mit Sauerstoffmangeldefekten behafteten Quarzglases erfolgt nach der in der EP 1 580 170 A1 beschriebenen Methode. Dabei wird zunächst durch Flammenhydrolyse von SiCl₄ in üblicher Weise ein poröser SiO₂-Sootkörper mit einem Außendurchmesser von 100 mm und einem Gewicht von 1 kg hergestellt. Dieser wird in einen Behandlungsofen eingebracht, der Ofenraum evakuiert und auf eine Temperatur von 500 °C aufgeheizt. Nach einer Haltedauer von 60 min wird Hexamethyldisilazan mit Stickstoff als Trägergas mit einer Rate von 1 mol/h in den Ofenraum eingeleitet und der Sootkörper 3 Stunden lang in dieser Atmosphäre behandelt.

Anschließend wird der so behandelte Sootkörper in einen Vakuumofen eingebracht und darin unter Vakuum (0,001 mmHg) zunächst auf 800°C und nach einer Stunde auf eine Temperatur von 1600 °C aufgeheizt und zu Quarzglas gesintert. Im Verlauf der Temperaturbehandlung entweicht ein großer Teil des vorher herstellungsbedingt in den SiO₂-Sootkörper eingebrachten Wasserstoffs.

Es wird ein transparentes, synthetisches Quarzglas hoher Reinheit erhalten, das einen Hydroxylgruppengehalt unterhalb von 1 Gew.-ppm, einen Chlorgehalt von weniger als 30 Gew.-ppm, einen Kohlenstoffgehalt von 100 Gew.-ppm, einen Stickstoffgehalt von 80 Gew.-ppm und einen Wasserstoffgehalt von weniger als 5 × 10¹⁶ Molekülen/cm³ aufweist. Die Konzentration an Li beträgt weniger als 2 Gew.-ppb und die Konzentration folgender metallischer Verunreinigungen beträgt jeweils weniger als 5 Gew.-ppb: Na, K, Mg, Al, K, Ca, Ti, Cr, Fe, Ni, Cu, Mo, W, V, Zn. Die Gesamtkonzentration metallischer Verunreinigungen liegt bei weniger als 100 Gew.-ppb. Das Quarzglas hat bei einer Temperatur von 1280 °C eine Viskosität von 12,4 (log η).

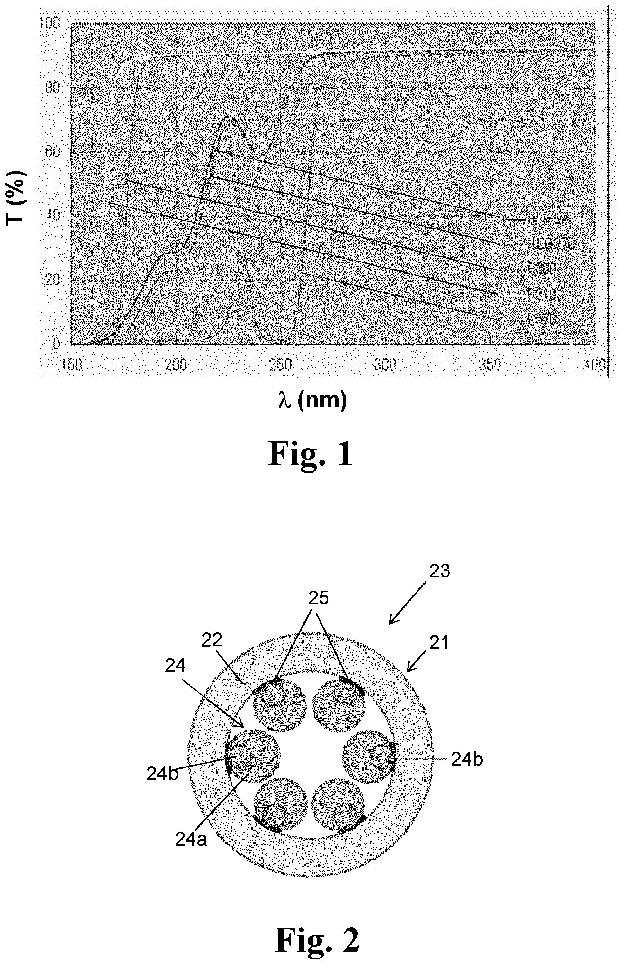

Die Behandlung des porösen SiO₂-Sootkörpers in reduzierend wirkender Atmosphäre - infolge der Einwirkung der organischen, siliziumhaltigen Verbindung Hexamethyldisilazan - führt zu unterschiedlichen Sauerstoffmangelzentren im synthetischen Quarzglas. Dies zeigt sich darin, dass das so behandelte Quarzglas bei einer Wellenlänge von etwa 247 nm eine hohe Absorption aufweist (siehe Figur 1).

Die Konzentration der bei dieser Wellenlänge absorbierenden ODC-Sauerstoffmangelzentren wird spektroskopisch ermittelt und beträgt 9,14 × 10¹⁶ cm⁻³.

Die ODC-Sauerstoffmangelzentren des Quarzglas bewirken eine Absorption im UV-Wellenlängenbereich, wie die Transmissionsspektren von **Figur 1** zeigen. Auf der y-Achse ist die gemessene Transmission T (in %) über der Wellenlänge λ (in nm) über den Wellenlängenbereich von 150 bis etwa 400 nm aufgetragen. Die "gemessene Transmission" T beinhaltet Reflexionsverluste an Oberflächen und unterscheidet sich insoweit von der sogenannten "inneren Transmission" (oder "Reintransmission"); bei einer Probendicke von 1 cm.

Das Diagramm enthält das Transmissionsprofil des Quarzglases, dessen Herstellung oben erläutert ist (Bezeichnung: L570). Zum Vergleich sin weitere Transmissionsprofile von anderen handelsüblichen Quarzglas-Qualitäten aufgenommen. Die Bezeichnungen "HLQ270" und "Hlx-LA" stehen für Quarzglassorten, die aus natürlich vorkommendem Quarzkristall erschmolzen worden sind. "F310" ist ein synthetisch erzeugtes Quarzglas mit einem geringen Chlorgehalt (< 0,2 Gew.-ppm) und einem Hydroxylgruppengehalt um 200 Gew.-ppm. Und "F300" ist ein anderes synthetisch erzeugtes Quarzglas mit einem geringen Hydroxylgruppengehalt (< 0,2 Gew.-ppm) und einem Chlorgehalt im Bereich von 800 bis 2.000 Gew.-ppm. Die Sauerstoffmangelzentren der Probe L570 zeigen sich in einem ausgeprägten Minimum der Transmission im Wellenlängenbereich von etwa 245 bis 255 nm. Die beiden Quarzglas-Qualitäten aus synthetischem Quarzglas zeigen in diesem Wellenlängenbereich keine Absorption und sind demnach für den Einsatz als Sauerstoffmangelzentren enthaltendes "Wandungsmaterial" im Sinne dieser Erfindung nicht geeignet. Das relative Transmissionsminimum der aus natürlichem Rohstoff erschmolzenen Quarzglasproben deutet zwar auf einen gewissen Anteil an Sauerstoffmangelzentren hin, jedoch sind diese Quarzglas-Qualitäten aufgrund der intrinsisch vorhandenen Verunreinigungen für diesen Einsatz ebenfalls nicht geeignet.

Die so hergestellte und Sauerstoffmangelzentren beladene Quarzglas-Qualität wird zur Herstellung einer Vorform für eine Antiresonanz-Hohlkernfaser eingesetzt. Im Folgenden wird die Herstellung der Vorform an einem Beispiel erläutert.

**Figur** 2 zeigt schematisch eine primäre Vorform 23 mit einem Hüllrohr 21 mit einer Hüllrohr-Wandung 22, an deren Innenmantelfläche an zuvor definierten azimutalen Positionen im gleichmäßigen Abstand Antiresonanzelement-Vorformlinge 24 fixiert sind; im Ausführungsbeispiel sind es sechs Vorformlinge 24, in einer anderen, nicht dargestellten bevorzugten Ausführungsform ist es eine ungeradzahlige Anzahl von Vorformlingen.

Das Hüllrohr 21 besteht aus dem mit Sauerstoffmangelzentren beladenen Quarzglas und hat eine Länge von 1000 mm, einen Außendurchmesser von 27 mm und einen Innendurchmesser von 20 mm. Die Antiresonanzelement-Vorformlinge 24 liegen als Ensemble miteinander verschachtelter Strukturelemente aus einem ARE-Außenrohr 24a und eines ARE-Innenrohres 24b vor. Das ARE-Außenrohr 24a hat einen Außendurchmesser von 6,2 mm und das ARE-Innenrohr 24b hat einen Außendurchmesser von 2,5 mm. Die Wandstärke beider Strukturelemente (24a; 24b) ist gleich und beträgt 0,3 mm. Das Durchmesserverhältnis beträgt beim ARE-Außenrohr 24a somit 1,107 und beim ARE-Innenrohr beträgt es 1,315. Die Längen von ARE-Außenrohr 24a und ARE-Innenrohr 24b entsprechen der Hüllrohr-Länge. Das ARE-Innenrohr 24b und das ARE-Außenrohr 24a bestehen ebenfalls aus dem mit Sauerstoffmangelzentren beladenen Quarzglas.

Die Fixierung der Antiresonanzelement-Vorformlinge 24 an der Innenwand des Hüllrohrs 21 erfolgt durch thermisches punktuelles Anbonden mittels eines Brenners. Die Verbindungsstellen sind mit der Bezugsziffer 25 bezeichnet..

Die Antiresonanzelement-Vorformlinge 24 werden unter Einsatz einer Positionierungs-Schablone mit konstruktiv vorgegebener sternförmiger Anordnung von Haltearmen für die einzelnen Antiresonanzelement-Vorformlinge 24 aufgesetzt. Die Positionierungs-Schablone ist dabei auf den Bereich um die beiden stirnseitigen Hüllrohr-Enden beschränkt.

Durch diese Methode wird eine genaue und reproduzierbare Verbindung zwischen Hüllrohr 21 und Antiresonanzelement-Vorformlingen 24 geschaffen.

Die primäre Vorform 23 wird mit einem Überfangzylinder aus Quarzglas überfangen, wobei der Überfangzylinder auf das Hüllrohr 21 aufkollabiert und gleichzeitig das Rohr-Ensemble zu einer sekundären Vorform elongiert wird. Der Überfangzylinder hat einen Außendurchmesser von 63,4 mm und eine Wandstärke von 17 mm. Der Überfangzylinder kann aus einem handelsüblichen, synthetischen Quarzglas ohne eine messbare Konzentration an Sauerstoffmangelzentren bestehen, wie im Ausführungsbeispiel aus dem unter der Handelsbezeichnung "F300" gebräuchlichen synthetischen Quarzglas.

Beim Kollabier- und Elongierprozess wird die koaxiale Anordnung von Hüllrohr 21 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1°C gehalten. Dadurch können Temperaturschwankungen im Heißformprozess auf weniger als +/- 0.5°C begrenzt werden.

Die im Kollabier- und Elongierprozess gebildete sekundäre Vorform hat einen Außendurchmesser von etwa 50 mm und eine aus äußerem Mantel und innerem Mantel zusammengesetzte Mantel-Wanddicke von 16,6 mm. Die maximale Wanddickenschwankung (größter Wert minus kleinster Wert) der Antiresonanzelement-Vorformlinge beträgt weniger als 4 µm.

Die nachfolgende Tabelle nennt die Abzugsparameter bei unterschiedlichen Außendurchmessern vor (VOR) und nach (NACH) dem Umformprozess (Kollabieren und Elongieren).

**Tabelle 1**

| **Außendurchmesser VOR [mm]** | **Außendurchmesser NACH [mm]** | **Hüllrohr länge [mm]** | **Vorschubgeschwindigkeit [mm/min]** | **Abzug [mm/min]** |
|---|---|---|---|---|
| 90 | 70 | 1000 | 15 | 9,80 |
| 80 | 70 | 1000 | 15 | 4,59 |
| 40 | 20 | 1000 | 5 | 15 |
| 25 | 20 | 1000 | 10 | 5,63 |

Die Heizzone hat eine Länge von 100 mm. Die maximale Abweichung der Wanddicke der Antiresonanzelement-Vorformlinge in der Vorform beträgt bei allen Ausführungsbeispielen etwa 4 µm. Aus den im Kollabier- und Elongierprozess auf diese Weise gebildeten sekundären Vorformen wurden Antiresonante Hohlkernfasern mit einem Außendurchmesser von 200 µm beziehungsweise 230 mm gezogen, und die Wanddicken der Antiresonanzelemente wurden bestimmt.

Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Die Heizzone wird auf eine Soll-Temperatur von etwa 2100 °C mit einer Regelgenauigkeit von +/-0.1 °C gehalten. Dadurch können Temperaturschwankungen im Heißformprozess auf weniger als +/- 0.5°C begrenzt werden. Gleichzeitig wird dem Kernbereich (Hohlkern) Gas zugeführt, so dass sich im Kernbereich ein Innendruck von 4 mbar einstellt.

Durch den so geführten Faserziehprozess wird eine Antiresonante Hohlkernfaser mit darin eingebetteten Antiresonanzelementen erhalten. Das Faserende ist nach dem Faserziehprozess sauber und frei von Ablagerungen. Dies wird auf den Einsatz der mit Sauerstoffmangelzentren beladenen Quarzglas-Qualität zurückgeführt.

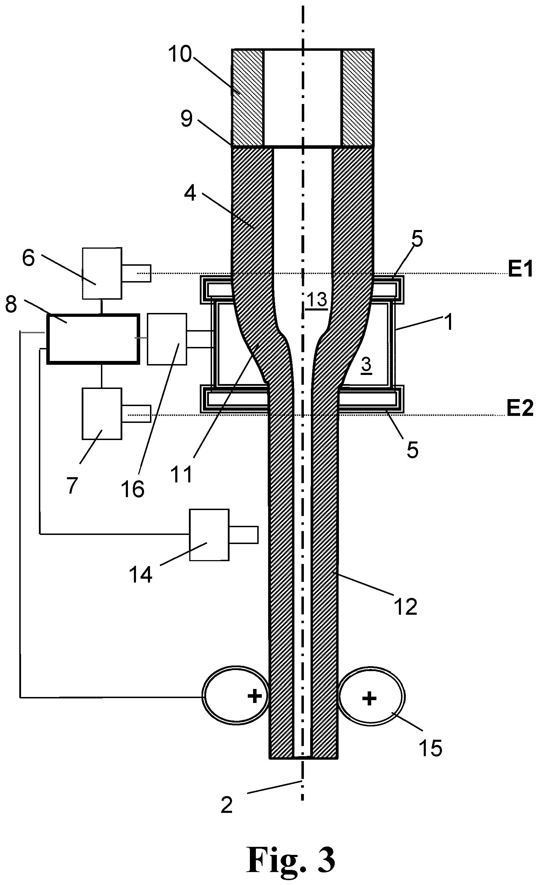

Die in **Figur** 3 gezeigte Vorrichtung dient zum werkzeugfreien Elongieren eines Ausgangszylinders 4 aus undotiertem und mit Sauerstoffmangelzentren beladenen Quarzglas zu einem Zwischenzylinder.

Die Außenwandung des Ausgangszylinders 4 wird mittels Umfangsschleifers, der mit einem #80 Schleifstein bestückt ist, grob geschliffen, wodurch der vorgegebene Soll-Außendurchmesser im Wesentlichen erhalten wird. Die Außenmantelfläche wird dann mittels eines NC-Umfangsschleifers fein geschliffen. Die Innenmantelfläche des so erhaltenen Rohres wird insgesamt mittels einer Honmaschine, die mit einer #80 Honleiste bestückt ist gehont, wobei der Glättungsgrad fortlaufend verfeinert wird, und die Endbehandlung mit einer #800 Honleiste erfolgt. Anschließend wird der Ausgangszylinder 4 in einer 30%igen Flusssäure-Ätzlösung kurz geätzt. Auf diese Weise wird ein Ausgangszylinder 4 mit einem Außendurchmesser von 200 mm und einem Innendurchmesser von 70 mm gefertigt. Dieser wird anschließend einem Vertikalziehverfahren in einer Vorrichtung gemäß Figur 2 zu einem Zwischenzylinder 12 elongiert.

Die Vorrichtung umfasst einen vertikal orientierten Widerstands-Heizrohr 1 aus Grafit, der einen im Querschnitt kreisförmigen Heizraum 3 umschließt. Das Heizrohr 1 besteht aus einem ringförmigen Element mit einem Innendurchmesser von 240 mm, einem Außendurchmesser von 260 mm und einer Länge von 200 mm. Das Heizrohr 1 umschließt die eigentliche Heizzone. Es ist beiderseits mittels 55 mm breiten Verlängerungsstücken 5 aus Grafitrohr verlängert, die einen Innendurchmesser von 250 mm und einen Außendurchmesser von 280 mm haben. Das Innenvolumen der Heizzone Vc beträgt etwa 8140 mm³

In Höhe einer oberen Erfassungsebene E1 (an der Oberkante des oberen Verlängerungsstücks 5) ist ein Pyrometer 6 angeordnet, welches die Oberflächentemperatur des Ausgangszylinders 1 erfasst. In Höhe einer unteren Erfassungsebene E2 (an der Unterkante des unteren Verlängerungsstücks 5) ist ein weiteres Pyrometer 7 angeordnet, welches die Oberflächentemperatur des elongierten Rohrstrangs 12 erfasst. Die Temperatur-Messwerte der Pyrometer 6 und 7 sowie die vom Pyrometer 16 gemessene Temperatur des Heizrohres 1 werden jeweils einem Rechner 8 zugeführt.

Das obere Ende des Ausgangszylinders 4 ist über eine Schweißverbindung 9 mit einem Quarzglas-Halterohr 10 verbunden, mittels dem es in horizontaler und vertikaler Richtung verschiebbar ist.

In dem vertikal ausgerichteten Heizrohr 1 wird der Quarzglas-Ausgangszylinder 4 mit einem Außendurchmesser von 200 mm und einem Innendurchmesser von 75 mm so justiert, dass seine Längsachse koaxial zu Mittelachse 2 des Heizrohres 1 verläuft. Der Ausgangszylinder 4 wird in der Heizzone 3 auf eine Temperatur oberhalb von 2.200 °C erhitzt und mit einem vorgegebenen Vorschub abgelassen. Aus der sich bildenden Ziehzwiebel 11 wird der Quarzglas-Rohrstrang 12 mit geregelter Ziehgeschwindigkeit auf einen nominalen Außendurchmesser von 27 mm und einen Innendurchmesser von 20 mm (Wanddicke: 3,5 mm) als Zwischenzylinder abgezogen. Die durchgehende Innenbohrung von Ausgangszylinder 4 und Zwischenzylinder-Rohrstrang 12 trägt die Bezugsziffer 13. Die Rohrabzugsgeschwindigkeit wird mittels eines Abzugs 15 erfasst und über den Rechner 8 eingestellt. Die radialen Abmessungen des abgezogenen Zwischenzylinder-Rohrstrangs entsprechen denen des Hüllrohres 21 von Fig. 2.

Der Zwischenzylinder-Rohrstrang 12 zeigt eine glatte geschmolzene und partikelfreie Oberfläche. Aus ihm wird das Hüllrohr 21 abgelängt und im Übrigen wird er zu dem ARE-Außenrohr 24aweiterverarbeitet. In gleicher Weise wird ein Rohrstrang gezogen, aus dem das ARE-Innenrohr 24b abgelängt wird.

Dazu wird er in einem zweiten Elongierschritt in einer zweiten Ziehanlage als Ausgangszylinder für die Herstellung von ARE-Außenrohren beziehungsweise ARE-Innenrohren eingesetzt. Die dafür eingesetzte zweite Ziehanlage gleicht der von Figur 3, sie unterscheidet sich im Wesentlichen durch die Länge und den Innendurchmesser der ihrer Heizzone. Die Heizzone (das Heizrohr) hat einen Innendurchmesser von 120 mm, einem Außendurchmesser von 140 mm und eine Länge von 100 mm.

## Patentansprüche

1. Mikrostrukturierte optische Faser, die einen sich entlang einer Faser-Längsachse erstreckenden Kernbereich und einen den Kernbereich umgebenden inneren Mantelbereich aufweist und die von Hohlkanälen durchzogen ist, von denen mindestens ein Teil von einem Wandungsmaterial aus synthetischem Quarzglas begrenzt ist, das eine Chlorkonzentration von weniger als 300 Gew.-ppm aufweist, **dadurch gekennzeichnet, dass** das synthetische Quarzglas des Wandungsmaterials Sauerstoffmangelzentren in einer Konzentration von mindestens 2 × 10¹⁵ cm⁻³ aufweist.

2. Optische Faser nach Anspruch 1, **dadurch gekennzeichnet, dass** das Quarzglas eine Konzentration an Sauerstoffmangelzentrenn von mindestens 5×10¹⁵ cm⁻³, besser 1×10¹⁶ cm⁻³ und vorzugsweise mindestens 5×10¹⁶ cm⁻³ aufweist.

3. Optische Faser nach Anspruch 1 oder 2, **dadurch gekennzeichnet, dass** das Quarzglas Sauerstoffmangelzentren in einer. Konzentration von maximal 2×10²⁰ cm⁻³, vorzugsweise maximal 5×10¹⁹ cm⁻³, maximal 1×10¹⁹ cm⁻³, maximal 5×10¹⁸ cm⁻³, maximal 2×10¹⁸ cm⁻³, maximal 1×10¹⁸ cm⁻³, maximal 5×10¹⁷ cm⁻³, maximal 2×10¹⁷ cm⁻³ und besonders bevorzugt maximal 1×10¹⁷ cm⁻³ enthält.

4. Optische Faser nach einem der vorhergehenden Ansprüche, **dadurch gekennzeichnet, dass** das Quarzglas einen Hydroxylgruppengehalt von weniger als 10 Gew.-ppm, vorzugsweise weniger als 1 Gew.-ppm aufweist.

5. Optische Faser nach einem der vorhergehenden Ansprüche, **dadurch gekennzeichnet, dass** das Quarzglas einen Halogengehalt von weniger als 20 Gew.-ppm, vorzugsweise weniger als 10 Gew.-ppm aufweist.

6. Optische Faser nach einem der vorhergehenden Ansprüche, **dadurch gekennzeichnet, dass** das Quarzglas Fremdsubstanzen - mit Ausnahme von Kohlenstoff und Stickstoff - in einer Konzentration von insgesamt weniger als 30 Gew.-ppm, vorzugsweise weniger als 3 Gew.-ppm enthält.

7. Optische Faser nach einem der vorhergehenden Ansprüche, **dadurch gekennzeichnet, dass** das Quarzglas eine Viskosität bei einer Temperatur von 1.200°C von mindestens 10¹³ dPas aufweist.

8. Optische Faser nach einem der vorhergehenden Ansprüche, **dadurch gekennzeichnet, dass** der Kernbereich mindestens einen Hohlkern aufweist, und dass der innere Mantelbereich eine mikrostrukturierte regelmäßige Anordnung von sich in Längsrichtung erstreckenden Hohlkanälen umfasst, und dass der innere Mantelbereich aus dem Wandungsmaterial gefertigt ist.

9. Optische Faser nach einem der Ansprüche 1 bis 7, **dadurch gekennzeichnet, dass** der Kernbereich mindestens einen Hohlkern aufweist, und dass der innere Mantelbereich sich in Richtung der Faser-Längsachse erstreckende hohle Strukturelementen umfasst, die ringförmig an der Innenmantelfläche eines Innenmantels angeordnet sind, und die Licht durch einen Antiresonanz-Effekt entlang des Hohlkerns leiten.

10. Optische Faser nach Anspruch 9, **dadurch gekennzeichnet, dass** die hohlen Strukturelemente jeweils eine ARE-Außenkapillare und mindestens eine mit einer Innenmantelfläche der ARE-Außenkapillare verbundene, verschachtelte NE-Innenkapillare umfassen, und dass der Innenmantel, die ARE-Außenkapillare und/oder die NE-Innenkapillare aus dem Wandungsmaterial gefertigt sind.

11. Optische Faser nach Anspruch 9 oder 10, **dadurch gekennzeichnet, dass** sie einen den inneren Mantelbereich umgebenden äußeren Mantelbereich umfasst, der aus dem Wandungsmaterial gefertigt ist.

12. Vorform zur Herstellung einer mikrostrukturierten optischen Faser nach einem der Ansprüche 1 bis 11, wobei die Vorform einen sich entlang einer Vorform-Längsachse erstreckenden Kernbereich und einen den Kernbereich umgebenden inneren Mantelbereich aufweist und die von Hohlkanälen durchzogen ist, von denen mindestens ein Teil von einem Wandungsmaterial aus synthetisch erzeugtem Quarzglas begrenzt ist, das eine Chlorkonzentration von weniger als 300 Gew.-ppm und Sauerstoffmangelzentren in einer Konzentration von mindestens 2×10¹⁵ cm⁻³ aufweist.

## Claims

1. A microstructured optical fiber which has a core region extending along a longitudinal axis of the fiber and an innercladding region surrounding the core region, and which is traversed by hollow channels, at least some of which are delimited by a wall material made of synthetic quartz glass having a chlorine concentration of less than 300 ppm by weight, **characterized in that** the synthetic quartz glass of the wall material has oxygen deficiency centers in a concentration of at least 2 × 10¹⁵ cm⁻³.

2. The optical fiber according to claim 1, **characterized in that** the quartz glass has a concentration of oxygen deficiency centers of at least 5 × 10¹⁵ cm⁻³, preferably 1 × 10¹⁶ cm⁻³, and more preferably at least 5 × 10¹⁶ cm⁻³.

3. The optical fiber according to either claim 1 or claim 2, **characterized in that** the quartz glass contains oxygen deficiency centers in a concentration of at most 2 × 10²⁰ cm⁻³, preferably at most 5 × 10¹⁹ cm⁻³, at most 1 × 10¹⁹ cm⁻³, at most 5 × 10¹⁸ cm⁻³, at most 2 × 10¹⁸ cm⁻³, at most 1 × 10¹⁸ cm⁻³, at most 5 × 10¹⁷ cm⁻³, at most 2 × 10¹⁷ cm⁻³, and particularly preferably at most 1 × 10¹⁷ cm⁻³.

4. The optical fiber according to any of the preceding claims, **characterized in that** the quartz glass has a hydroxyl group content of less than 10 ppm by weight, preferably less than 1 ppm by weight.

5. The optical fiber according to any of the preceding claims, **characterized in that** the quartz glass has a halogen content of less than 20 ppm by weight, preferably less than 10 ppm by weight.

6. The optical fiber according to any of the preceding claims, **characterized in that** the quartz glass contains foreign substances, except for carbon and nitrogen, in a concentration of a total of less than 30 ppm by weight, preferably less than 3 ppm by weight.

7. The optical fiber according to any of the preceding claims, **characterized in that** the quartz glass has a viscosity of at least 10¹³ dPa·s at a temperature of 1200°C.

8. The optical fiber according to any of the preceding claims, **characterized in that** the core region has at least one hollow core, and **in that** the innercladding region comprises a microstructured regular arrangement of hollow channels extending in the longitudinal direction, and **in that** the innercladding region is made from the wall material.

9. The optical fiber according to any of claims 1 to 7, **characterized in that** the core region has at least one hollow core, and **in that** the innercladding region comprises hollow structural elements which extend in the direction of the longitudinal axis of the fiber, are arranged annularly on the inner lateral surface of an innercladding and guide the light via an anti-resonant effect along the hollow core.

10. The optical fiber according to claim 9, **characterized in that** the hollow structural elements each comprise an ARE outer capillary tube and at least one nested NE inner capillary tube which is connected to an inner lateral surface of the ARE outer capillary tube, and **in that** the innercladding, the ARE outer capillary tubes and/or the NE inner capillary tubes are made from the wall material.

11. The optical fiber according to either claim 9 or claim 10, **characterized in that** it comprises an outercladding region which surrounds the innercladding region and which is made from the wall material.

12. A preform for producing a microstructured optical fiber according to any of claims 1 to 11, wherein the preform has a core region extending along a preform longitudinal axis and an innercladding region surrounding the core region, and which is traversed by hollow channels, at least some of which are delimited by a wall material made of synthetically produced quartz glass having a chlorine concentration of less than 300 ppm by weight and oxygen deficiency centers in a concentration of at least 2 × 10¹⁵ cm⁻³.

## Revendications

1. Fibre optique microstructurée, laquelle présente une région de coeur s'étendant le long d'un axe longitudinal de fibre et une région de gaine intérieure entourant la région de coeur, et laquelle est traversée par des canaux creux dont au moins une partie est limitée par un matériau de paroi en verre de quartz synthétique, lequel verre de quartz synthétique présente une concentration en chlore inférieure à 300 ppm en poids, **caractérisée en ce que** le verre de quartz synthétique du matériau de paroi présente des centres déficients en oxygène dans une concentration d'au moins 2 × 10¹⁵ cm⁻³.

2. Fibre optique selon la revendication 1, **caractérisée en ce que** le verre de quartz présente une concentration en centres déficients en oxygène d'au moins 5 × 10¹⁵ cm⁻³, au mieux de 1 × 10¹⁶ cm⁻³ et de préférence d'au moins 5 × 10¹⁶ cm⁻³.

3. Fibre optique selon la revendication 1 ou 2, **caractérisée en ce que** le verre de quartz contient des centres déficients en oxygène dans une concentration d'au plus 2 × 10²⁰ cm⁻³, de préférence d'au plus 5 × 10¹⁹ cm⁻³, d'au plus 1 × 10¹⁹ cm⁻³, d'au plus 5 × 10¹⁸ cm⁻³, d'au plus 2 × 10¹⁸ cm⁻³, d'au plus 1 × 10¹⁸ cm⁻³, d'au plus 5 × 10¹⁷ cm⁻³, d'au plus 2 × 10¹⁷ cm⁻³ et de manière particulièrement préférée d'au plus 1 × 10¹⁷ cm⁻³.

4. Fibre optique selon l'une des revendications précédentes, **caractérisée en ce que** le verre de quartz présente une teneur en groupes hydroxyle inférieure à 10 ppm en poids, de préférence inférieure à 1 ppm en poids.

5. Fibre optique selon l'une des revendications précédentes, **caractérisée en ce que** le verre de quartz présente une teneur en halogènes inférieure à 20 ppm en poids, de préférence inférieure à 10 ppm en poids.

6. Fibre optique selon l'une des revendications précédentes, **caractérisée en ce que** le verre de quartz contient des substances étrangères, à l'exception du carbone et de l'azote, dans une concentration totale inférieure à 30 ppm en poids, de préférence inférieure à 3 ppm en poids.

7. Fibre optique selon l'une des revendications précédentes, **caractérisée en ce que** le verre de quartz présente une viscosité d'au moins 10¹³ dPa·s à une température de 1 200 °C.

8. Fibre optique selon l'une des revendications précédentes, **caractérisée en ce que** la région de coeur présente au moins un coeur creux, et **en ce que** la région de gaine intérieure comprend un agencement microstructuré régulier de canaux creux s'étendant dans le sens longitudinal, et **en ce que** la région de gaine intérieure est fabriquée à partir du matériau de paroi.

9. Fibre optique selon l'une des revendications 1 à 7, **caractérisée en ce que** la région de coeur présente au moins un coeur creux, et **en ce que** la région de gaine intérieure comprend des éléments de structure creux s'étendant dans le sens de l'axe longitudinal de fibre, lesquels éléments de structure sont disposés de manière annulaire sur la surface de gaine intérieure d'une gaine intérieure et dirigent la lumière par un effet d'antirésonance le long du coeur creux.

10. Fibre optique selon la revendication 9, **caractérisée en ce que** les éléments de structure creux comprennent respectivement un tube capillaire extérieur ARE et au moins un tube capillaire intérieur NE imbriqué relié à une surface de gaine intérieure du tube capillaire extérieur ARE, et **en ce que** la gaine intérieure, le tube capillaire extérieur ARE et/ou le tube capillaire intérieur NE sont fabriqués à partir du matériau de paroi.

11. Fibre optique selon la revendication 9 ou 10, **caractérisée en ce qu'**elle comprend une région de gaine extérieure entourant la région de gaine intérieure, laquelle région de gaine extérieure est fabriquée à partir du matériau de paroi.

12. Préforme pour la fabrication d'une fibre optique microstructurée selon l'une des revendications 1 à 11, dans laquelle la préforme présente une région de coeur s'étendant le long d'un axe longitudinal de préforme et une région de gaine intérieure entourant la région de coeur, et est traversée par des canaux creux dont au moins une partie est limitée par un matériau de paroi en verre de quartz produit de façon synthétique, lequel verre de quartz présente une concentration en chlore inférieure à 300 ppm en poids et des centres déficients en oxygène dans une concentration d'au moins 2 × 10¹⁵ cm⁻³.
